Europäisches Patentamt

European Patent Office

Office européen des brevets

(11) Veröffentlichungsnummer: **0 215 252 B1**

# EUROPÄISCHE PATENTSCHRIFT

(45) Veröffentlichungstag der Patentschrift:
26.09.90

(51) Int. Cl.⁵: **G05B 19/04**

(21) Anmeldenummer: 86110560.9

(22) Anmeldetag: 30.07.86

(54) Einrichtung zum Auslösen von Steuersignalen für eine Werkzeugmaschine.

(30) Priorität: 12.08.85 DE 3528922

(43) Veröffentlichungstag der Anmeldung:
25.03.87 Patentblatt 87/13

(45) Bekanntmachung des Hinweises auf die Patenterteilung:
26.09.90 Patentblatt 90/39

(84) Benannte Vertragsstaaten:
CH DE FR IT LI NL SE

(56) Entgegenhaltungen:
GB-A- 2 082 797
US-A- 3 974 432
US-A- 4 142 246

(73) Patentinhaber: Siemens Aktiengesellschaft,
Wittelsbacherplatz 2, D-8000 München 2(DE)

(72) Erfinder: Röhrle, Josef, Dipl.-Ing. (FH), Am Kahlberg 12,
D-8521 Hessdorf(DE)

## Beschreibung

Die Erfindung bezieht sich auf ein elektronisches Nockenschaltwerk, dem von einer Wegmeßeinrichtung einer Werkzeugmaschine Wegsignale zugeführt werden, die entsprechend dem jeweiligen Wert des Weges einen, elektronischen Schreib-Lese-Speicher adressieren, in dem für alle Nockenspuren zu den aufeinanderfolgenden Werten der Wegsignale parallel Daten gespeichert sind, aus denen den Nockenstellungen entsprechende Steuersignale "Nocken aktiv" und "Nocken passiv" für eine nachgeschaltete Verarbeitungseinrichtung gebildet werden, und wobei in einer Initialisierungsphase über ein Steuerwerk die jeweiligen Daten in den Schreib-Lese-Speicher einschreibbar sind.

Die Steuersignale für Pressen und Stanzen werden noch überwiegend mechanisch gesteuert. Dazu werden mechanische Nockenschaltwerke verwendet, deren Antrieb beispielsweise über die Schwungscheibe der Presse oder Stanze erfolgt. Bei jedem Werkzeugwechsel müssen die Nocken neu justiert werden, was eine erhebliche Umrüstnachzeit verursacht.

Es sind daher bereits Schaltwerke gebräuchlich, bei denen das mechanische Nockenschaltwerk durch ein elektronisches Nockenschaltwerk ersetzt ist. Dabei werden abhängig von der Winkelstellung der Schwungscheibe oder auch der Stellung eines Hydraulikstößels die Nockensignale als Steuersignale generiert. Die Schwungscheibe ist dazu mit einem Winkelcodierer, meist einem Absolutgeber, gekoppelt. Die Winkelstellung wird erfaßt und von einem Mikroprozessor werden abhängig von den Wegsignalen die Steuersignale gebildet. Dazu vergleicht der Prozessor die aktuellen Winkelpositionen mit abgespeicherten Werten und löst bei Übereinstimmung dieser Werte die entsprechenden Steuersignale aus. Da der Prozessor bei einer Vielzahl von Spuren, wie diese der Anzahl von Nocken eines mechanischen Steuerwerks entspricht, diese Spuren sequentiell bearbeiten muß und die Taktfrequenz des Prozessors begrenzt ist, hat dies zur Folge, daß mit steigender Drehzahl die Auflösung, d.h. die Anzahl von Stufungen über den Weg - beispielsweise eine Umdrehung der Schwungscheibe -, so stark begrenzt ist, daß dies für eine Reihe von Anwendungen nicht ausreicht.

Ein elektronisches Nockenschaltwerk der eingangs genannten Art ist aus der US-A-3 974 432 bekannt, wobei aus dieser Schrift ganz allgemein für technische Prozesse der Einsatz von Weggebern geläufig ist, die zyklisch Prozesse so steuern, wie dies in einem Schreib-Lese-Speicher vorgegeben wird. Dazu wird in einer Initialisierungsphase der Schreib-Lese-Speicher entsprechend eingeschrieben. Für den Fachmann würde es sich dabei bei Einsatz einer derartigen Einrichtung als elektronisches Nockenschaltwerk jedoch allenfalls anbieten, dem Speicher zum Auslösen eines Steuersignals "Nocken aktiv" ein Kennsignal logisch "1" und zum Auslösen eines Steuersignals "Nocken passiv" ein Steuersignal logisch "0" einzuprägen.

Bei Kenntnis der Entgegenhaltung GB-A-2082 797 wäre dem Fachmann jedoch auch die Möglichkeit bekannt geworden, den Beginn eines Zyklusses durch ein Startsignal anzugeben und diesen Zyklus bis zum Beginn eines Stoppsignals aufrechtzuhalten.

Aufgabe der Erfindung ist es, in ausgesprochen einfacher Weise auch einen Betrieb für zwei Wegrichtungen, also beispielsweise beide Drehrichtungen eines Drehgebers, zu ermöglichen.

Die Erfindung geht von einer Einrichtung gemäß der US-A-3 974 432 aus und verwendet die Erkenntnis aus der GB-A-2 082 797, technische Zustände durch ein Start- und Stoppsignal auszulösen. Die dazu erforderlichen Kennsignale werden dabei gemäß der Erfindung in einer ganz bestimmten Art und Weise ausgebildet. Es wird nämlich ein zwei Bit breites Kennsignal verwendet, das so ausgebildet ist, daß das erste Kennsignal und das zweite Kennsignal invers zueinander gestaltet werden. Dies erfolgt so, daß für das erste Kennsignal ein Binärwort "01" bzw. "10" und dementsprechend für das zweite Kennsignal ein Binärwort "10" bzw. "01" vorgesehen ist.

Gemäß der Erfindung wird demzufolge die obengenannte Aufgabe dadurch gelöst, daß im Schreib-Lese-Speicher für mindestens eine der Nockenspuren die Daten jeweils in Form eines von drei möglichen Kennsignalen gegeben sind, daß dem Schreib-Lese-Speicher ein Umsetzer nachgeschaltet ist, der mit dem Detektieren des ersten Kennsignals den Beginn eines Steuersignals "Nocken aktiv" auslöst und mit dem Detektieren des zweiten Kennsignals den Beginn eines Steuersignals "Nocken passiv" auslöst, wohingegen das dritte Kennsignal ein Beibehalten des jeweils vorliegenden Steuersignals bewirkt, daß dazu für die Kennsignale jeweils zwei Bit breite Binärwörter vorgesehen sind, daß ausgehend von einer Wegrichtung für das erste Kennsignal das Binärwort "01" bzw. "10" und das zweite Kennsignal das dazu inverse Binärwort "10" bzw. "01" vorgesehen ist und daß beim Vorliegen der anderen Wegrichtung das erste und das zweite Kennsignal dem Umsetzer invertiert zugeführt werden.

Eine erste vorteilhafte Ausbildung der Erfindung ist dadurch gekennzeichnet, daß als Umsetzer ein JK-Speicherglied vorgesehen ist. Damit ist eine ausgesprochen einfache schaltungstechnische Realisierung der erfindungsgemäßen Einrichtung möglich.

Bei einer solchen Einrichtung ist es möglich, daß zwischen dem Schreib-Lese-Speicher und dem JK-Speicherglied eine drehrichtungsabhängig gesteuerte Umpolschaltung angeordnet ist. Damit kann das Steuersignal für beide Drehrichtungen generiert werden, indem aus dem ersten Kennsignal ein zweites Kennsignal und aus dem zweiten Kennsignal ein erstes Kennsignal geformt wird.

Für den Fall, daß Verschiebungen der Kennsignale nicht häufig vorzunehmen sind, ist es auch möglich, daß im Schreib-Lese-Speicher mindestens für eine weitere Nockenspur die für diese Spur relevanten Daten als zwei Kennungen logisch "0" und logisch "1" vorgegeben sind, wobei diese Kennungen direkt den jeweiligen Steuersignalen "Nocken aktiv" und "Nocken passiv" zugeordnet sind. Dadurch wird der Speicherplatzbedarf für eine derartige Spur von Daten wesentlich reduziert.

Dadurch, daß im Schreib-Lese-Speicher mindestens eine Nockenspur vorgesehen ist, deren Folge von Daten zwei Kennungen logisch "0" und logisch "1" darstellt, wobei mit Eintreffen einer der Kennungen für eine durch ein Zeitglied vorgegebene Zeitspanne jeweils eines der Steuersignale "Nocken aktiv" bzw. "Nocken passiv" angebbar ist, kann ausgesprochen einfach eine Zeitsteuerung der Steuersignale realisiert werden.

Eine zuverlässige Wegmessung wird dadurch erreicht, daß der Wegmeßeinrichtung ein Absolutgeber zugeordnet ist. Nach einem Ausfall der Wegmeßeinrichtung wäre diese nach der Inbetriebnahme ohne eine Synchronisation sofort wieder einsatzfähig.

Ein Ausführungsbeispiel der Erfindung ist in der Zeichnung dargestellt und wird im folgenden näher erläutert.

Dabei zeigen:

Fig. 1 ein Blockschaltbild und
Fig. 2 signifikante Diagramme.

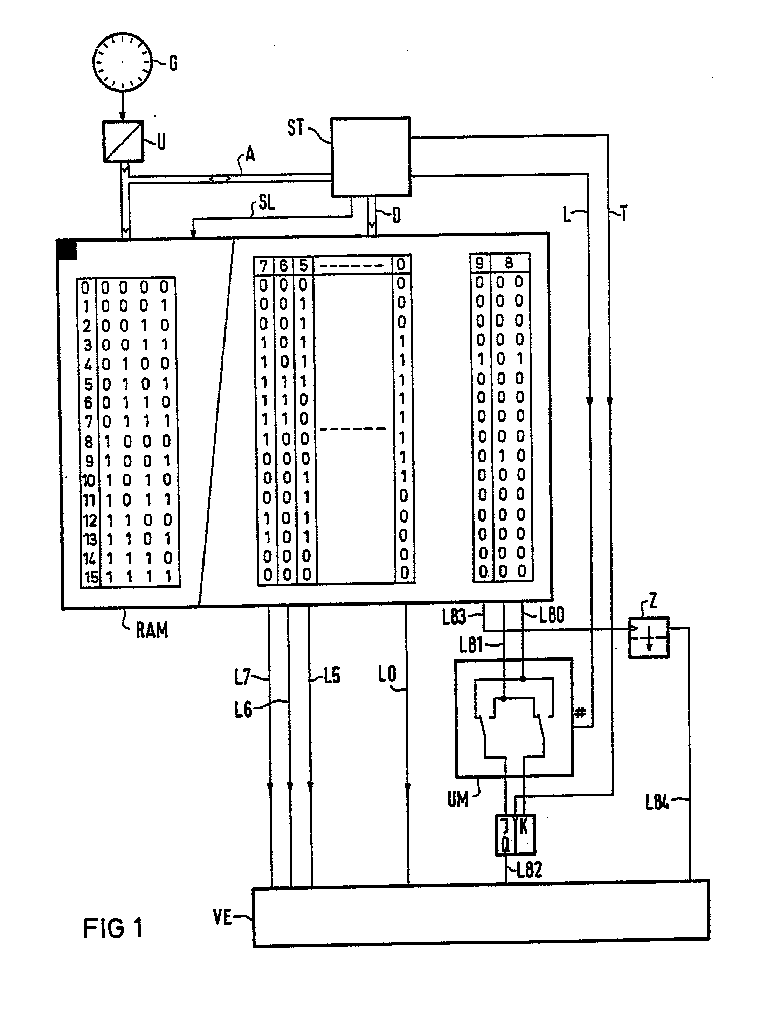

In der Darstellung gemäß Fig.1 ist ein Absolutgeber G zur Wegmessung bei einer der Übersichtlichkeit halber nicht dargestellten Werkzeugmaschine gezeigt, dessen Ausgangssignal an einen Umsetzer U gelangt. Der Umsetzer U erzeugt aus den Gebersignalen gemäß dem Ausführungsbeispiel pro Umdrehung 16 Adressen 0 bis 15 in Form von entsprechenden Dualzahlen 0000 bis 1111 zuzuordnenden Binärsignalen, wie dies im linken Teil eines an den Umsetzer U angeschlossenen Schreib-Lese-Speichers RAM tabellarisch aufgeführt ist. Die Auflösung in 16 Adressen ist beim Ausführungsbeispiel nur der Übersichtlichkeit halber gewählt, bei einer Auflösung von 0,1°, wie ein solcher Wert realistisch ist, wären 3600 Adressen für jede Umdrehung des Gebers G vorzusehen, wodurch eine Adreßbreite von 12 bit sich ergeben würde.

Die vom Umsetzer U ermittelten Adressen gelangen nicht nur an den Adreßeingang des Schreib-Lese-Speichers RAM, sondern über einen Adreßbus A auch an ein Steuerwerk ST. Dieses ist zum einen mit einer Steuerleitung SL, zum anderen mit einem Datenbus D mit dem Schreib-Lese-Speicher RAM verbunden. Mit Hilfe eines entsprechenden Steuersignals auf der Steuerleitung SL kann vom Steuerwerk ST festgelegt werden, ob sich der Schreib-Lese-Speicher RAM im Schreib- bzw. Lesebetrieb zu befinden hat.

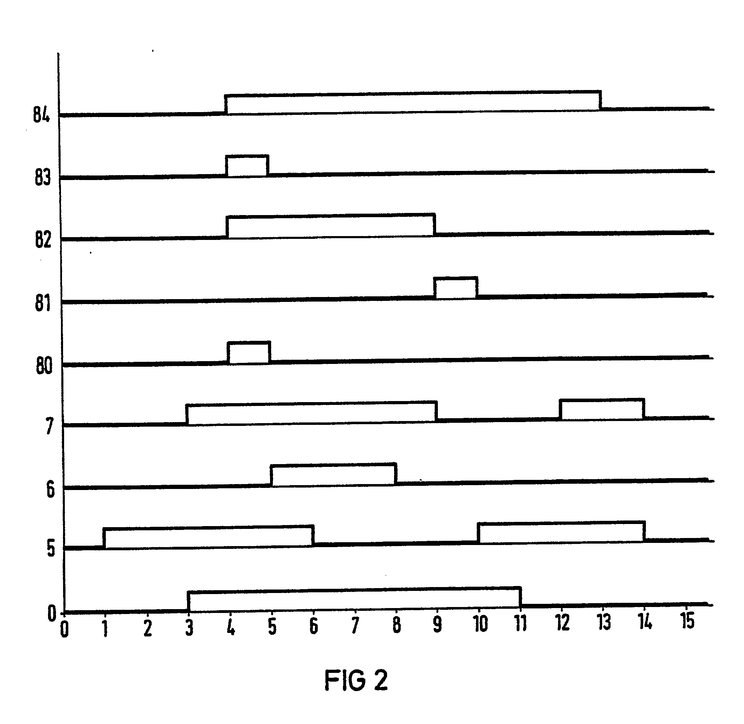

Den Adressen des Schreib-Lese-Speichers RAM sind, wie im rechten Teil des Symbols für den Schreib-Lese-Speicher RAM angedeutet, in Spuren 0 bis 9 Kennsignale zugeordnet, wobei jede Spur der Nockenbahn eines mechanischen Schaltwerkes entsprechen würde. Bei den Spuren 0 bis 7 sind jeweils zwei Kennungen logisch "0" und logisch "1" in jeder der Spuren dazu vorgesehen, um anzugeben, bei welcher Adresse welches Steuersignal auszugeben ist. Die Ausgabe der Steuersignale der Spuren 0 bis 7 erfolgt dabei über Leitungen L0 bis L7, die an eine Verarbeitungseinrichtung VE führen. In der Darstellung gemäß Fig.2 sind die Steuersignale auf den Leitungen L0 bis L7 in Zeilen 0 bis 7 für die Adressen 0 bis 15 gezeigt. Es ist ersichtlich, daß für die Spur 0 von der Adresse 0 bis einschließlich der Adresse 2 ein Steuersignal vorliegt, das bei einem mechanischen Steuerwerk einer passiven Nocke entsprechen würde, während ab der Adresse 3 bis einschließlich der Adresse 10 ein Steuersignal wirksam ist, das bei einem mechanischen Steuerwerk einer aktiven Nocke entspräche und wobei daraufhin folgend von der Adresse 11 bis einschließlich der Adresse 15 wiederum das erstgenannte Steuersignal vorliegt. In entsprechender Weise ergeben sich die Steuersignale in den Zeilen 5, 6 und 7 für die Spuren 5, 6 und 7 des Schreib-Lese-Speichers RAM. Die Spuren 1 bis 4 und die entsprechenden Leitungen L1 bis L4 in Fig.1 und die Zeilen 1 bis 4 sind der Übersichtlichkeit halber nicht dargestellt. Auf die Spuren 8 und 9 wird im folgenden noch gesondert eingegangen.

Das Einschreiben der Kennungen in den Schreib-Lese-Speicher RAM erfolgt mit Hilfe des Steuerwerkes ST dadurch, daß dem Schreib-Lese-Speicher RAM über die Steuerleitung SL ein Schreibbefehl gegeben wird und nach vom Steuerwerk ST ausgelöster Adressierung des Schreib-Lese-Speichers RAM über den Adreßbus A über den Datenbus D die entsprechenden Kennungen logisch "0" und logisch "1" dem Schreib-Lese-Speicher RAM eingeprägt werden können. Dieses Einprägen der Kennungen kann in einer Initialisierungsphase erfolgen. Falls eine Veränderung der eingespeicherten Daten während des Betriebs erfolgen sollte, wäre diese nur zwischen den einzelnen durch den Umsetzer U erfolgenden Adressierungen des Schreib-Lese-Speichers RAM möglich. Eine derartige Aktualisierung würde jedoch pro Verschiebungsschritt des Steuersignals eine Aktualisierung der Kennsignale zweier Adressen erfordern, so daß bei einer Verschiebung des Anfangs und des Endes eines Steuersignals um beispielsweise drei Schritte der Dateninhalt von sechs Adressen zu verändern ist. Eine solche Veränderung erfordert aber eine relativ lange Verarbeitungszeit.

Hier setzt die Erfindung ein, indem für beliebige Verschiebungen von elektronisch darzustellenden Nocken nur maximal die Daten von zwei Adressen zu verändern sind. Dazu sind wie in Spur 8 angegeben, jeder Adresse jeweils drei Kennsignale zugeordnet. Diese Kennsignale können dann während der Initialisierungsphase oder zwischen den einzelnen Adressierungen in den Schreib-Lese-Speicher RAM eingegeben werden. Ein Kennsignal logisch "01" entspricht dabei den Beginn eines Steuersignals, ein Kennsignal logisch "10" entspricht dabei dem Wechsel zum anderen Kennsignal und ein Kennsignal logisch "00" entspricht dabei dem Bestehen des einen oder anderen Kennsignals. Diese Kennsignale werden jeweils über Leitungen L80 und L81 sowie eine Umpolschaltung UM an die Eingänge J und K eines taktflankengesteuerten JK-Gliedes SP geleitet, dessen Ausgang Q über eine Leitung L82 mit der Verarbeitungseinrichtung VE verbunden ist.

Bei der angenommenen Schaltstellung der Umpolschaltung UM verursacht das der Adresse 4 als Datum zugeordnete Kennsignal logisch "01", das in Zeile 80 von Fig.2 dargestellt ist, ein Setzen des Speichergliedes SP, was zu einem Steuersignalverlauf gemäß Zeilen 82 gemäß Fig.2 führt, während das der Adresse 9 zugeordnete Kennsignal logisch "10" ein Rücksetzen des Speichergliedes SP verursacht, was in einem Wechsel des Steuersignals gemäß Zeile 82 von Fig.2 sich äußert. Dabei wird der Setz- und Rücksetzvorgang des Speichergliedes SP taktflankengesteuert, indem über eine Taktleitung T ein Steuertakt des Steuerwerks ST an das Speicherglied SP geleitet wird. Die Frequenz dieses Taktes ist dabei größer als die größte Adressenwechselfrequenz.

Dadurch, daß die Kennsignale für Beginn und Ende eines Steuersignals sich nur durch eine Inversion unterscheiden, ist es möglich, bei einer Drehrichtungsumkehr durch eben eine solche Inversion der Kennsignale weiterhin die Bildung der Steuersignale zu gewährleisten. Dazu ermittelt das Steuerwerk ST aus der Folge der Ausgangssignale des Umsetzers U die Drehrichtung des Absolutgebers G. Sofern ein Wechsel der Drehrichtung erfolgt, wird ein entsprechendes Binärsignal über eine Leitung L an die Umpolschaltung UM geleitet, die dann die jeweilige Schaltstellung einnimmt.

Die Spur 9 zeigt die Möglichkeit auf, daß mit Hilfe zweier Kennungen logisch "0" und logisch "1" eine sogenannte Zeitnocke realisiert werden kann, indem das Auftreten von logisch "1", im Ausführungsbeispiel bei der Adresse 4, ein Zeitglied Z setzt, wodurch sich der in Zeile 84 von Fig.2 gezeigte Steuersignalverlauf ergibt.

## Patentansprüche

1. Elektronisches Nockenschaltwerk, dem von einer Wegmeßeinrichtung (G, U) einer Werkzeugmaschine Wegsignale zugeführt werden, die entsprechend dem jeweiligen Wert des Weges einen elektronischen Schreib-Lese-Speicher (RAM) adressieren, in dem für alle Nockenspuren zu den aufeinanderfolgenden Werten der Wegsignale parallel Daten gespeichert sind, aus denen den Nockenstellungen entsprechende Steuersignale "Nocken aktiv" und "Nocken passiv" für eine nachgeschaltete Verarbeitungseinrichtung (VE) gebildet werden, und wobei in einer Initialisierungsphase über ein Steuerwerk (ST) die jeweiligen Daten in den Schreib-Lese-Speicher (RAM) einschreibbar sind, dadurch gekennzeichnet, daß im Schreib-Lese-Speicher (RAM) für mindestens eine der Nockenspuren (8) die Daten jeweils in Form eines von drei möglichen Kennsignalen ("01", "10", "00") gegeben sind, daß dem Schreib-Lese-Speicher (RAM) ein Umsetzer (JK-Glied) nachgeschaltet ist, der mit dem Detektieren des ersten Kennsignals ("01") den Beginn eines Steuersignals "Nocken aktiv" auslöst und mit dem Detektieren des zweiten Kennsignals ("10") den Beginn eines Steuersignals "Nocken passiv" auslöst, wohingegen das dritte Kennsignal ("00") ein Beibehalten des jeweils vorliegenden Steuersignals bewirkt, daß dazu für die Kennsignale jeweils zwei Bit breite Binärwörter vorgesehen sind, daß ausgehend von einer Wegrichtung für das erste Kennsignal das Binärwort "01" bzw. "10" und das zweite Kennsignal das dazu inverse Binärwort "10" bzw. "01" vorgesehen ist und daß beim Vorliegen der anderen Wegrichtung das erste und das zweite Kennsignal dem Umsetzer (JK-Glied) invertiert zugeführt werden.

2. Einrichtung nach Anspruch 1, dadurch gekennzeichnet, daß als Umsetzer ein JK-Speicherglied vorgesehen ist.

3. Einrichtung nach Anspruch 2, dadurch gekennzeichnet, daß als Inversionsglied eine Umpolschaltung (UM) vorgesehen ist.

4. Einrichtung nach einem der vorstehenden Ansprüche, dadurch gekennzeichnet, daß im Schreib-Lese-Speicher (RAM) mindestens für eine weitere Nockenspur die für diese Spur relevanten Daten als zwei Kennungen logisch "0" und logisch "1" vorgegeben sind, wobei diese Kennungen direkt den jeweiligen Steuersignalen "Nocken aktiv" und "Nocken passiv" zugeordnet sind.

5. Einrichtung nach einem der vorstehenden Ansprüche, dadurch gekennzeichnet, daß im Schreib-Lese-Speicher (RAM) mindestens eine Nockenspur vorgesehen ist, deren Folge von Daten zwei Kennungen logisch "0" und logisch "1" darstellt, wobei mit Eintreffen einer der Kennungen für eine durch ein Zeitglied (Z) vorgegebene Zeitspanne jeweils eines der Steuersignale "Nocken aktiv" bzw. "Nocken passiv" angebbar ist.

6. Einrichtung nach einem der vorstehenden Ansprüche, dadurch gekennzeichnet, daß der Wegmeßeinrichtung ein Absolutgeber (G) zugeordnet ist.

## Claims

1. An electronic cam-operated controller to which displacement signals are supplied by a displacement measuring device (G, U) of a machine tool, which signals, corresponding with the respective value of the displacement, address an electronic read-write memory (RAM), in which for all cam tracks to the successive values of the displacement signals parallel data are stored, from which control signals corresponding to the cam positions "cam active" and "cam passive" are formed for a downstream processing device (VE), and wherein in an initialisation phase the respective data are able to be registered by way of a control unit (ST) in the read-write memory (RAM), characterised in that in the read-write memory (RAM) for at least one of the cam tracks (8) the data are given in each case in the form of one of three possible characterising signals ("01", "10" , "00"), in that a converter (JK element) is downstream of the read-write memory (RAM), which with the detecting of the first characterising signal ("01") triggers the beginning of a control signal "cam active "and with the detecting of the second characterising signal ("10") triggers the beginning of a control signal "cam passive", against which the third characterising signal ("00") effects retention of the respective present control signal, in that for this in each case for the characterising signals two bit-wide binary words are provided, in that proceeding from one displacement direction the binary word "01" or "10" is provided for the first characterising signal and the binary word "10" or "01" which is inverse thereto is provided for the second characterising signal and in that when the other displacement direction is present the first and second characterising signals are supplied inverted to the converter (JK-element).

2. A device according to claim 1, characterised in that a JK-memory element is provided as converter.

3. A device according to claim 2, characterised in that a polarity reversal circuit (UM) is provided as inversion element.

4. A device according to one of the preceding claims, characterised in that in the read-write memory (RAM) at least for one further cam track the relevant data for this track is selected as two characteristics logic "0" and logic "1", wherein these characteristics are designated directly to the respective control signals "cam active" and "cam passive".

5. A device according to one of the preceding claims, characterised in that in the read-write memory (RAM) at least one cam track is provided, the series of data of which represents two characteristics logic "0" and logic "1", wherein with the arrival of one of the characteristics one of the respective control signals "cam active" or "cam positive" is indicated for a time span selected by a time element (Z).

6. A device according to one of the preceding claims, characterised in that an absolute transmitter (G) is allocated to the displacement measuring device.

## Revendications

1. Combinateur électronique à cames, auquel un dispositif de mesure de déplacement (G, U) d'une machine-outil envoie des signaux de déplacement, qui adressent, en fonction de la valeur du déplacement, une mémoire d'enregistrement/lecture électronique (RAM), dans laquelle sont mémorisées, pour toutes les pistes des cames, et ce parallèlement à des valeurs successives des signaux de déplacement, des données à partir desquelles des signaux de commande correspondant aux positions des cames, à savoir "came active" et "came passive", sont formés pour un dispositif de traitement (VE) branché en aval, et dans lequel, lors d'une phase d'initialisation, les données respectives peuvent être inscrites dans la mémoire d'enregistrement/lecture (RAM), par l'intermédiaire d'une unité de commande (ST), caractérisé par le fait que dans la mémoire d'enregistrement/lecture (RAM), les données sont prédéterminées, pour au moins l'une des pistes de cames (8), respectivement sous la forme de l'un de trois signaux possibles d'identification ("01", "10", "00"), qu'en aval de la mémoire d'enregistrement/lecture (RAM) est branché un convertisseur (circuit JK), qui, lors de la détection du premier signal d'identification "01", déclenche le début d'un signal de commande "came active", et déclenche, lors de la détection du second signal d'identification ("10"), le début d'un signal ; de commande "came passive", tandis que le troisième signal d'identification ("00") déclenche le maintien du signal de commande respectivement présent, qu'à cet effet il est prévu, pour les signaux d'identification, des mots binaires possédant respectivement une largeur de deux bits, qu'à partir d'une direction de déplacement, le mot binaire "0" ou "10" est prévu pour le premier signal d'identification et le mot binaire, qui en est l'inverse, à savoir "10" ou "01" est prévu pour le second signal d'identification et que, dans le cas de l'autre sens de déplacement, les premier et second signaux d'identification sont envoyés en étant inversés au convertisseur (circuit JK).

2. Dispositif suivant la revendication 1, caractérisé par le fait qu'il est prévu, comme convertisseur, un circuit de mémoire de type JK.

3. Dispositif suivant la revendication 2, caractérisé par le fait qu'il est prévu, comme circuit inverseur, un circuit d'inversion de polarisation (UM).

4. Dispositif suivant l'une des revendications précédentes, caractérisé par le fait que dans la mémoire d'enregistrement/lecture (RAM), au moins pour une autre piste de came, les données associées à cette piste sont prédéterminées sous la forme de la caractérisation "0" logique et "1" logique, ces caractérisations étant associées directement aux signaux de commande respectifs "came active" et "came passive".

5. Dispositif suivant l'une des revendications précédentes, caractérisé par le fait que dans la mémoire d'enregistrement/lecture (RAM), il est prévu au moins une piste de came, dont la suite de données représente deux caractérisations "0" logique et "1" logique, auquel cas lors de l'arrivée de l'une des caractérisations, respectivement l'un des signaux de commande "came active" ou "came passive" peut être délivré pendant un intervalle de temps prédéterminé par un circuit de temporisation (Z).

6. Dispositif suivant l'une des revendications précédentes, caractérisé par le fait qu'un transmetteur de valeurs absolues (G) est associé au dispositif de mesure de déplacement.

FIG 1

FIG 2